# EUROPEAN PATENT SPECIFICATION

(11) **EP 2 068 554 B1**
(45) Date of publication and mention of the grant of the patent: **02.11.2011**
(21) Application number: 08170401.7
(22) Date of filing: 01.12.2008
(51) Int. Cl.: H04N 5/232, H04N 5/445, H04N 5/77, H04N 5/775, H04L 12/28

(54) **Method for providing information on type of image apparatus and image apparatus adopting the same**
Verfahren zur Bereitstellung von Informationen zu dem Bildvorrichtungstyp und Bildvorrichtung dafür
Procédé pour fournir des informations sur le type d'appareil d'images et appareil d'images l'adoptant

(30) Priority: 07.12.2007 KR 20070127118
(43) Date of publication of application: 10.06.2009
(73) Proprietor: Samsung Electronics Co., Ltd., Suwon-si, Gyeonggi-do 442-742 (KR)
(72) Inventor: Bae, Dae-gyu, Suwon-si Gyeonggi-do (KR); Kim, In-hwan, Suwon-si Gyeonggi-do (KR); Kim, Dong-young, Seongnam-si Gyeonggi-do (KR)
(74) Representative: Robinson, Ian Michael

(56) References cited:
- EP-A- 1 858 260
- WO-A-2007/072791
- KR-A- 20060 035 858
- US-A1- 2003 227 568
- "High-Definition Multimedia Interface Specification Version 1.3" INTERNET CITATION, [Online] XP002391813 Retrieved from the Internet: URL:http://www.hdmi.org/download/HDMI_Spec _1.3_GM1.pdf> [retrieved on 2006-07-24]

## Description

### BACKGROUND OF THE INVENTION

### 1. Field of the Invention

Apparatuses and methods consistent with the present invention relate to providing an image apparatus and a method for controlling the same, and more particularly, to providing a method for providing information on the type of image apparatus being used and an image apparatus adopting the same.

### 2. Description of the Related Art

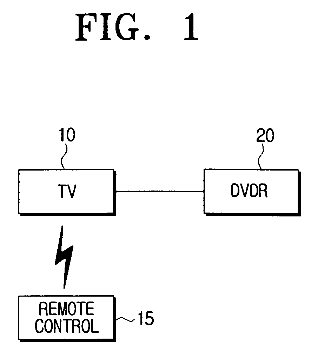

FIG. 1 shows an image providing system connected using a high definition multimedia interface consumer electronics control (HDMI CEC) standard. The appended claims have been characterised based on this HDMI CEC standard.

In the image providing system, a television (TV) 10 is connected to a digital versatile disc recorder (DVDR) 20 according to an HDMI CEC standard. Control signals as well as image signals are transmitted and received between the TV 10 and the DVDR 20.

Accordingly, the TV 10 controls the operation of the DVDR 20 according to user commands transmitted using a remote control 15, so the user can enjoy services provided by the DVDR 20. In order to use services of the DVDR 20, the user must search through menus of the DVDR 20 and select specific services from the menus.

In order to use a particular service as described above, the user must know what type of an external device provides the particular service, causing inconvenience to the user. If the user does not know the type of external device providing the particular service, the user must search for the functions of the external devices connected to the TV 10 and find the particular external device.

As an increasingly diverse range of external devices are connected to a TV for user convenience, it has become difficult for the user to use the image providing system, resulting in reduced utilization of the image providing system.

Therefore, there is a need for methods for the user to use the image providing system more easily and conveniently.

The document "High-Definition Multimedia Interface Specification Version 1.3", available from the internet at http://www.hdmi.org/downtoad/HDMI_Spec_1.3_GM1.pdf, specifies connecting multimedia devices based on the High-Definition Multimedia Interface standard including the protocol "Consumer Electronics Control".

United States Patent Application Publication US 2003/227568 A1 (STAHL THOMAS ANTHONY [US] ET AL) discloses an apparatus and method for controlling a plurality of consumer electronic devices interconnected by an IEEE 1394 connection.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a method for acquiring information on the type of external device and an image apparatus adopting the same.

Another aspect of the present invention provides a method for controlling an image apparatus which provides a list of external devices according to the acquired information on the types of external device and an image apparatus adopting the same, so that the user can manipulate the external devices more conveniently.

According to an exemplary aspect of the present invention, there is provided a method for providing information on the type of image apparatus connected, the method including transmitting to external devices a request message inquiring whether or not the external device which is connected using a high definition multimedia interface consumer electronics control (HDMI CEC) standard is a device of a particular type, and receiving from the external devices a response message answering whether or not the external device is a device of the particular type, in response to the request message.

The request message may include data inquiring whether or not the external device is a device of the particular type, and the response message may include at least one of data answering the request message and data indicating whether or not the external device is a device of the particular type.

The device of the particular type may be a digital media adapter (DMA) device.

The method may further include determining whether or not a user command to display external devices of the particular type is input, and displaying external devices of the particular type from among external devices connected according to the HDMI CEC standard based on the received response message if a user command to display external devices of the particular type is input.

The method may further include determining a number of external devices of the particular type.

The method may further include displaying a menu of the external device of the particular type if the number of external devices of the particular type is one.

The method may further include displaying a list of the external devices of the particular type if the number of external devices of the particular type is more than one.

The method may further include displaying information indicating there are no external devices of the particular type if the number of external devices of the particular type is zero.

The method may further include transmitting a request to the external device to send menu information, and receiving the menu information from the external device. wherein the menu information is displayed as the indication identifying the external device corresponding to the type.

The menu information is used to display a screen to access contents disposed on the external device.

The menu information comprises of menu items to control the external device. The menu items corresponds to a top menu of the external device.

According to another exemplary aspect of the present invention, there is provided a method for an image apparatus providing information on the type of the image apparatus to an external device which is connected according to the HDMI CEC standard, the method including receiving from the external device a request message inquiring whether or not the image apparatus is a device of a particular type, and transmitting to the external devices a response message answering whether or not the image apparatus is a device of the particular type, in response to the request message.

The request message may include data inquiring whether or not the external device is a device of the particular type, and the response message comprises at least one of data answering the request message and data indicating whether or not the external device is a device of the particular type.

According to another exemplary aspect of the present invention, there is provided an image apparatus including an interface which performs data communication with external devices which are connected according to the HDMI CEC standard, and a control unit which generates a request message inquiring whether or not the external device is a device of a particular type, transmits the request message to the external devices through the interface, and receives from the external devices a response message answering whether or not the external device is a device of the particular type, in response to the request message.

The request message may include data inquiring whether or not the external device is a device of the particular type, and the response message may include at least one of data answering the request message and data indicating whether or not the external device is a device of the particular type.

The device of the particular type may be a digital media adapter (DMA) device.

The image apparatus may further include a display, wherein the control unit displays external devices of the particular type on the display based on the received response message if a user command to display the external devices of the particular type is input.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 shows an image providing system connected using a HDMI CEC standard;
FIG. 2 is a block diagram of an image providing system to which the present invention can be applied;
FIG. 3 is a drawing describing a method for providing a menu of an external device of a particular type according to an exemplary embodiment of the present invention;
FIGS. 4A to 4E show the structure of messages regarding the types of image apparatus being used according to an exemplary embodiment of the present invention; and
FIG. 5 shows a remote control of a TV according to an exemplary embodiment of the present invention; and
FIGS. 6A to 6C show menus to be displayed on a display when a DMA key is selected according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

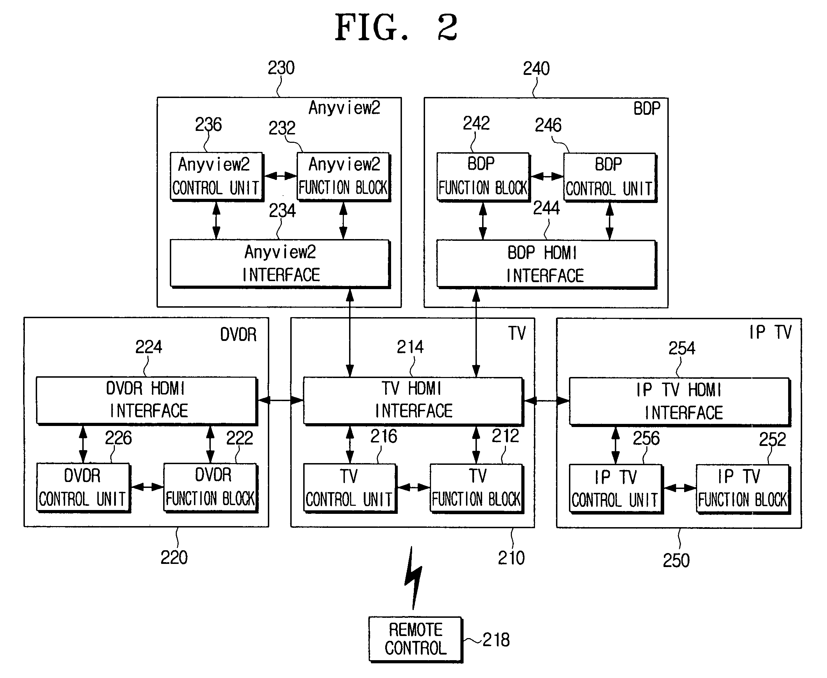

FIG. 2 is a block diagram of an image providing system to which the present invention can be applied. In the image providing system, a television (TV) 210 is individually connected to a digital versatile disc recorder (DVDR) 220, an Anyview2 device 230 which is a kind of multimedia device developed by Samsung, a Blu-ray disc player (BDP) 240, and an Internet protocol television (IPTV) 250 using a HDMI CEC standard.

As shown in FIG. 2, the TV 210 includes a TV function block 212, a TV HDMI interface 214, a TV control unit 216, and a remote control 218, and receives input of user commands using the remote control 218.

The TV function block 212 performs original functions of the TV 210. In more detail, the TV function block 212 performs processing of broadcast signals which are received from a broadcast stations wiredly or wirelessly, such as decoding and scaling, and displays the processed signals on a display (not shown), so the user can view the broadcast. In addition, the TV function block 212 display on the display images received from external devices, for example, the DVDR 220, the Anyview2 device 230, the BDP 240, and the IPTV 250, through the TV HDMI interface 214.

Furthermore, the TV function block 212 provides the user with a user interface (UI) means by displaying a list of external devices on the display. Menus displayed on the display by the TV function block 212 include menus provided by the TV 210 and menus provided by the external devices connected to the TV 210.

The TV HDMI interface 214 is connected to external devices according to the HDMI CEC standard, and enables transmission and reception of image signals and messages between the TV 210 and the external devices.

The TV control unit 216 controls the operation of the TV function block 212 according to user commands received using the remote control 218. The TV control unit 216 also controls the operation of an external device by transmitting control commands to the external device through the TV HDMI interface 214.

In particular, if a command to display external devices of a particular type is input by the user, the TV control unit 216 generates a type information request message inquiring whether or not an external device is of a particular type, and transmits the generated type information request message to the external device connected to the TV 210. If response messages from the connected external devices are received, the TV control unit 216 generates a list of external devices of the particular type based on the response messages.

In addition, if a user command to execute a particular service is input, the TV control unit 216 generates and transmits to an external device providing the particular service a service execution request message, and operates the TV HDMI interface 214 to transmit the generated service execution request message to the external device providing the particular service.

As shown in FIG. 2, the DVDR 220 includes a DVDR function block 222, a DVDR HDMI interface 224, and a DVDR control unit 226.

The DVDR function block 222 performs original functions of the DVDR 220. In more detail, the DVDR function block 222 records broadcast signals, which input from the TV 210 through the DVDR HDMI interface 224, on a mounted DVD, or reads image signals recorded on the mounted DVD and transmits the read image signals to the TV 210 through the DVDR HDMI interface 224.

The DVDR HDMI interface 224 is connected to the TV 210 according to the HDMI CEC standard, and enables transmission and reception of image signals and messages between the TV 210 and the DVDR 220.

The DVDR control unit 226 controls the operation of the DVD function block 222 according to a control command of the TV control unit 216 received through the DVDR HDMI interface 224.

In addition, if a type information request message inquiring whether or not the DVDR 220 is a device of a particular type is received from the TV 210, the DVDR control unit 226 identifies whether or not the DVDR 220 is a device of the particular type, and generates and transmits a response message to the TV 210.

In the present invention, the external devices connected to the TV 210 according to the HDMI CEC standard are referred to as CEC devices. Among CEC devices, some devices are defined as digital media adapter (DMA) devices by the manufacturer. The DMA devices are connected to an external display to show moving images, music, and image files, and enable the user to view the TV 210 in foreign countries through the Internet.

Accordingly, CEC devices are divided into DMA devices and non-DMA devices. In this exemplary embodiment, the Anyview2 device 230 and the IPTV 250 are DMA devices, and the DVDR 220 and the BDP 240 are non-DMA devices.

Therefore, if the DVDR control unit 226 receives a request message inquiring whether or not the DVDR 220 is a DMA device, the DVDR control unit 226 generates and transmits to the TV 210 a response message indicating that the DVDR 220 is not a DMA device.

The Anyview2 device 230 includes an Anyview2 function block 232, an Anyview2 HDMI interface 234, and an Anyview2 control unit 236.

The Anyview2 function block 232 performs original functions of the Anyview2 device 230. The Anyview2 HDMI interface 234 is connected to the TV 210 according to the HDMI CEC standard, and enables transmission and reception of audio/video data and messages between the TV 210 and the Anyview2 device 230. The Anyview2 control unit 236 controls the operation of the Anyview2 function block 232 according to a control command of the TV control unit 216 received through the Anyview2 HDMI interface 234. As described above, the Anyview2 device 230 is a DMA device.

The BDP 240 includes a BDP function block 242, a BDP HDMI interface 244, and a BDP control unit 246. The BDP function block 242 performs original functions of the BDP 240. The BDP HDMI interface 244 enables transmission and reception of data and messages between the TV 210 and the BDP 240. The BDP control unit 246 controls the operation of the BDP function block 242 according to a control command of the TV control unit 216 received through the BDP HDMI interface 244. The BDP 240 is a non-DMA device.

The IPTV 250 includes an IPTV function block 252, an IPTV HDMI interface 254, and an IPTV control unit 256. The IPTV function block 252 performs original functions of the IPTV 250. The IPTV HDMI interface 254 enables transmission and reception of data and messages between the TV 210 and the IPTV 250. The IPTV control unit 256 controls the operation of the IPTV function block 252 according to a control command of the TV control unit 216 received through the IPTV HDMI interface 254. The IPTV 250 is a DMA device.

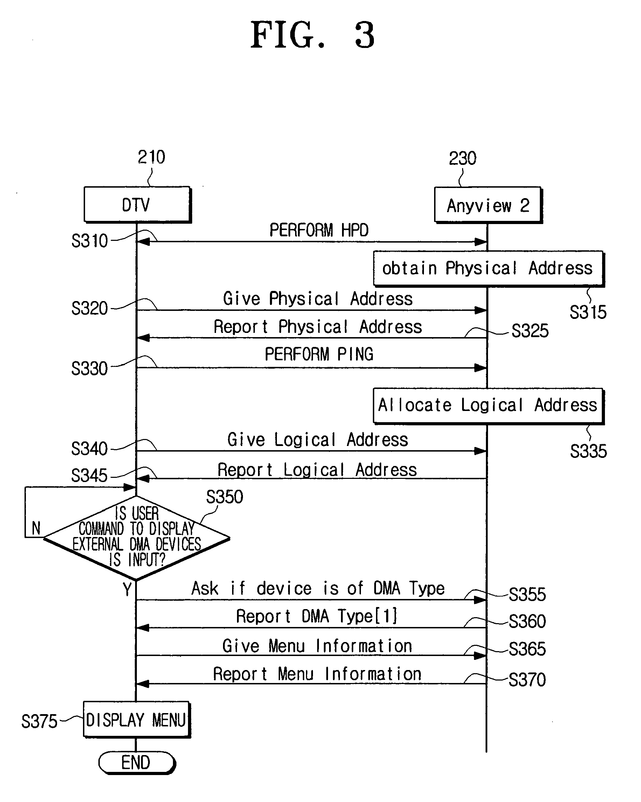

Hereinafter, the process of the TV 210 acquiring information regarding whether or not an external device is a device of a particular type from the external device and displaying a menu of the external device of the particular type is described with reference to FIG. 3, which is a drawing illustrating a method for providing a menu of an external device of a particular type according to an exemplary embodiment of the present invention.

As shown in FIG. 2, there are diverse external device connected to the TV 210. For convenience of description, it is assumed that the TV 210 is connected to only the Anyview2 device 230. The process of transmitting and receiving messages between the TV 210 and the Anyview2 device 230 is described below.

Returning to FIG. 3, if the TV 210 is connected to the Anyview2 device 230 in an HDMI CEC standard, HDMI hot plug detection (HPD) between the TV 210 and the Anyview2 device 230 is performed (S310).

By the HDMI HPD, the Anyview2 device 230 obtains a physical address (S315). The physical address depends upon which of the input port of an image apparatus is connected to the Anyview2 device 230. For example, if the Anyview2 device 230 is connected to a first input port of the TV 210 which is a sink, the Anyview2 device 230 obtains a physical address of (1, 0, 0, 0). If the Anyview2 device 230 is disconnected from the TV 210 and connected to another input port (for example, a second input port of the TV 210 or an input port of another image apparatus), the physical address changes.

The TV control unit 216 generates a physical address request message "Give Physical Address" requesting the physical address of the Anyview2 device 230, and transmits the message to the Anyview2 device 230 (S320). The Anyview2 control unit 236 generates a physical address response message "Report Physical Address" containing the obtained physical address, and transmits the message to the TV 210 (S325).

The Anyview2 device 230 connected to the TV 210 pings other image apparatuses connected to the TV 310 to receive a logical address of the Anyview2 device 230 (S330).

Through pinging other image apparatuses, the Anyview2 device 230 is allocated a logical address (S335). The logical address is predefined according to the CEC standard. The logical address can change whenever ping is performed. However, if an external device is allocated with a particular logical address, the same logical address cannot be allocated other external devices as the particular logical address, so each external device has a unique logical address.

The TV control unit 216 generates a logical address request message "Give Logical Address" requesting a logical address of the Anyview2 device 230, and transmits the message to the Anyview2 device 230 (S340). The Anyview2 control unit 236 generates a logical address response message "Report Logical Address" containing the allocated logical address, and transmits the message to the TV 210 (S345). Consequently, data communication between the TV 210 and the Anyview2 device 230 is enabled.

The TV control unit 216 determines whether or not a user command to display external DMA devices is input (S350). In greater detail, if the user wishes to enjoy services provided by external DMA devices connected to the image providing system, the user selects a DMA key mounted on the remote control 218 and thus the TV control unit 216 determines that a user command to display external DMA devices is input.

If the user command to display external DMA devices is input (S350-Y), the TV control unit 216 generates a type information request message "Ask if device is of DMA Type" inquiring whether or not an external device is a DMA device, and transmits the generated message to the external devices connected to the TV 210 (S355). The Anyview2 control unit 236 receives the type information request message through the Anyview2 HDMI interface 234.

Subsequently, the Anyview2 control unit 236 identifies whether or not the Anyview2 device 230 is a DMA device. Since whether or not the Anyview2 device 230 is a DMA device is preset at the time of manufacture, the Anyview2 control unit 236 confirms that the Anyview2 device 230 is a DMA device based on type information stored in a memory of the Anyview2 device 230. As described above, the Anyview2 device 230 is a DMA device, so the Anyview2 control unit 236 generates a response message "Report DMA Type[1]" indicating that the Anyview2 device 230 is a DMA device and transmits the message to the TV 210 (S360).

As it is assumed above that only the Anyview2 device 230 is connected to the TV 210, the TV control unit 216 determines that there is only one DMA device.

Next, the TV control unit 216 generates a menu request message "Give Menu Information" and transmits the message to the Anyview2 device 230 (S365). The Anyview2 control unit 236 generates a response message "Report Menu Information" of the Anyview2 device 230 and transmits the message to the TV 210 (S370).

The TV control unit 216 generates and displays a menu of the Anyview2 device 230 (S375).

The user may input a command to execute a particular service from the menu, and the TV 210 generates and transmits a message requesting service execution "Execute Service" to the Anyview2 device 230. As a result, the external DMA device can provide the TV 210 with the particular service.

In FIG. 3, an example was shown with only the Anyview2 connected to the TV 210, but a plurality of external DMA non-DMA devices may be connected to the TV 210.

In S350, if a user command to display external DMA devices is input, the TV control unit 216 may generate and display on the display a list of external DMA devices.

In addition, before receiving the user command to display external DMA devices, the TV control unit 216 may generate and transmit type information request messages to external devices, and receive response messages from the external devices, so that the TV control unit 216 can categorize the external devices in advance. Accordingly, if the user inputs a command to display external DMA devices, the TV control unit 216 can display external DMA devices more rapidly.

Furthermore, in this exemplary embodiment, the image providing system includes the TV and external devices. It is well-known that the TV and external devices are image apparatuses.

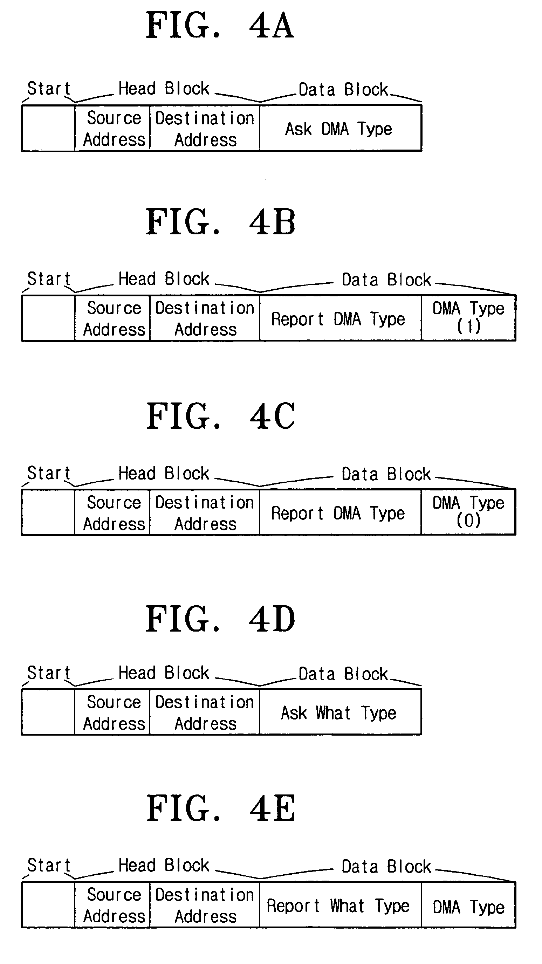

FIGS. 4A to 4E show the structure of messages regarding the types of image apparatus being used according to an exemplary embodiment of the present invention.

FIG. 4A illustrates the structure of a type information request message according to an exemplary embodiment of the present invention. In FIG. 4A, the type information request message includes a start block indicating the start of the message, a header block containing logical addresses of a source and destination, and a data block containing data inquiring about what types of image apparatus are connected. The data block is divided into an opcode area and an operand area. The data inquiring what types of image apparatus are connected are preferably contained in the opcode area.

FIGS. 4B and 4C illustrate the structures of a type information response message according to an exemplary embodiment of the present invention. The type information response message also includes a start block, a header block, and a data block, as in the type information request message. However, the data block contains not only data responding to the type information request message, but also information regarding what type of device an external device is. As shown in FIG. 4B, the data block of the type information response message contains "DMA Type (1)" indicating the external device is a DMA device, and as shown in FIG. 4C, the data block of the type information response message contains "DMA Type (0)" indicating the external device is not a DMA device.

FIGS. 4D and 4E illustrate the structures of a type information request message and type information response message according to another exemplary embodiment of the present invention. As shown in FIG. 4D, the data block of the type information request message may contain "Ask What Type", which is data inquiring what type of device an external device is. As shown in FIG. 4E, the data block of the type information response message may contain "DMA Type" which is data indicating the device is a DMA device.

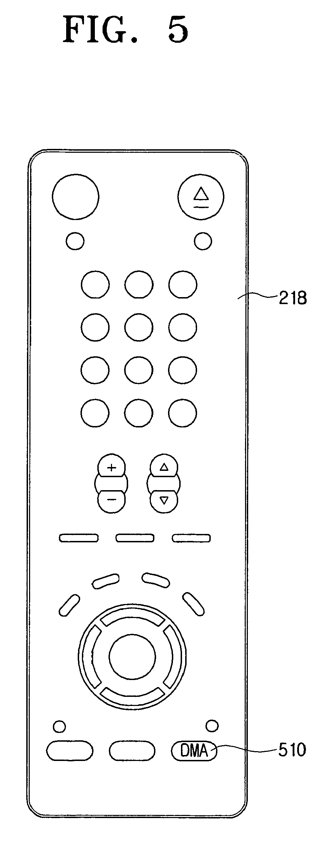

FIG. 5 shows a remote control of a TV according to an exemplary embodiment of the present invention. As shown in FIG. 5, the remote control 218 has a separate DMA key 510. Accordingly, the user can manipulate external DMA devices in the image providing system by selecting the DMA key 510 without searching for the external DMA devices from among external CEC devices.

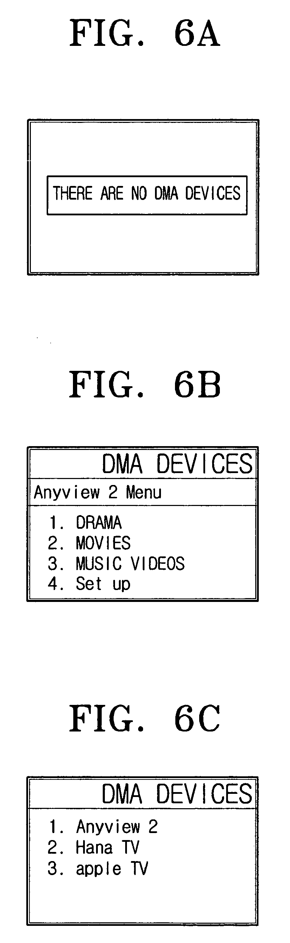

FIGS. 6A to 6C show menus to be displayed on a display when the DMA key is selected according to an exemplary embodiment of the present invention. In FIG. 6A, when the user selects the DMA key, if there is no DMA device connected to the TV 210, the TV 210 displays "There are no DMA devices" on the display. If there is a single DMA device connected to the TV 210, the TV 210 displays on the display the highest menu provided by the DMA device, together with the name of the device of the DMA, as shown in FIG. 6B. If there is a plurality of DMA devices connected to the TV 210, the TV 210 displays a list of names of the DMA devices on the display, as shown in FIG. 6C. The menu shown by the TV 210 need not be top menu but other sub-menus of the external devices.

In this exemplary embodiment, the user selects the DMA key on the remote control in order to manipulate DMA devices, but the present invention is not limited thereto. The user may also manipulate DMA devices using a DMA item from among menu items displayed on the display.

In this exemplary embodiment, particular type of devices described are DMA devices, but the particular type is not limited thereto. Image apparatuses can be classified as playback devices, recording devices, moving image devices, still image devices, audio devices and etc.

In FIG. 2, an image providing system which the present invention is applied to includes the TV, DVDR, Anyview2, BDP, and IPTV, but the technical idea of the present invention can also be applied to an image providing system implemented using image apparatuses other than those apparatuses.

Moreover, in this exemplary embodiment, the image apparatuses implementing the image providing system are connected to each other in a HDMI CEC standard, but this is merely an example for convenience of description. Diverse methods which can perform transmission and reception of image signals and messages between image apparatuses other than a HDMI CEC standard can be applied to the present invention.

As can be appreciated from the above description, information regarding the type of external devices connected is obtained, and a list of external devices or a menu of external devices is provided to the user according to the obtained information so that the user can use the image apparatus more conveniently.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for providing information on a type of one or more external devices (220, 230) that are connected to an image apparatus (210), the method **characterised by:**
transmitting to the one or more external devices (220, 230) a request message inquiring whether or not the external device (220, 230) which is connected using a high definition multimedia interface consumer electronics control HDMI CEC standard is a digital media adapter DMA device as a device of a particular type;
receiving from the one or more external devices (220, 230) a response message answering whether or not the external device (220, 230) is a digital media adapter DMA device, in response to the request message;
determining whether or not a user command to display information about external devices (220, 230) of a particular type is input; and
displaying information about the external devices (220, 230) of the particular type from among external devices (220, 230) connected according to the HDMI CEC standard based on the received response message if the user command to display external devices (220, 230) of the particular type is input.

2. The method of claim 1, wherein the request message comprises data inquiring whether or not the external device (220, 230) is a device of the particular type, and the response message comprises data indicating whether or not the external device (220, 230) is a digital media adapter DMA device.

3. The method of claim 1 or 2, further comprising determining a number of external devices (220, 230) of the particular type.

4. The method of claim 3, further comprising displaying a menu of the external device (220, 230) of the particular type if the number of external devices (220, 230) of the particular type is one.

5. The method of claim 3, further comprising displaying a list of the external devices (220, 230) of the particular type if the number of external devices (220, 230) of the particular type is more than one.

6. The method of claim 3, further comprising displaying information indicating there are no external devices (220, 230) of the particular type if the number of external devices (220, 230) of the particular type is zero.

7. The method of any preceding claim, further comprising the steps of:
transmitting a request to the external device (220, 230) to send menu information;
receiving the menu information from the external device (220, 230); and
displaying the menu information as an indication identifying the external device (220, 230) corresponding to the type.

8. The method of claim 7, comprising using the menu information to display a screen to access contents disposed on the external device (220, 230).

9. The method of claim 8, wherein the menu information comprises menu items to control the external device (220, 230).

10. The method of claim 9, wherein the menu items corresponds to a top menu of the external device (220, 230).

11. An image apparatus (210), comprising:
an interface (214) which performs data communication with external devices (220, 230) which are connected according to the HDMI CEC standard; and
a control unit (216) which:
generates a request message inquiring whether or not the external device (220, 230) is a digital media adapter DMA device as a device of a particular type,
transmits the request message to the external devices (220, 230) through the interface (214), and
receives from the external devices (220, 230) a response message answering whether or not the external device (220, 230) is a digital media adapter DMA device, in response to the request message,
wherein the control unit (216) displays external devices (220, 230) of the particular type on a display, based on the received response message, if a user command to display the external devices (220, 230) of the particular type is input.

12. The image apparatus (210) of claim 11, wherein the request message comprises data inquiring whether or not the external device (220, 230) is a digital media adapter (DMA) device, and the response message comprises data indicating whether or not the external device (220, 230) is a digital media adapter DMA device.

## Patentansprüche

1. Verfahren zum Bereitstellen von Informationen über einen Typ einer oder mehrerer externer Vorrichtungen (220, 230), die mit einer Abbildungsvorrichtung (210) verbunden sind, wobei das Verfahren **gekennzeichnet ist durch:**
Senden zu der einen oder den mehreren externen Vorrichtungen (220, 230) einer Anforderungsnachricht, die anfragt, ob die externe Vorrichtung (220, 230), die unter Verwendung einer hochauflösenden Multimediaschnittstellen-Konsumelektronik-Steuerungsnorm, HDMI-CEC-Norm, angeschlossen ist, eine digitale Medienadapter-Vorrichtung, DMA-Vorrichtung, die als Vorrichtung eines bestimmten Typs dient, ist oder nicht;
Empfangen von der einen oder den mehreren externen Vorrichtungen (220, 230) einer Antwortnachricht, die darauf antwortet, ob die externe Vorrichtung (220, 230) eine digitale Medienadapter-Vorrichtung, DMA-Vorrichtung, ist oder nicht, in Reaktion auf die Anforderungsnachricht;
Bestimmen, ob ein Anwenderbefehl zum Anzeigen von Informationen über externe Vorrichtungen (220, 230) eines bestimmten Typs eingegeben wird oder nicht; und
Anzeigen von Informationen über die externen Vorrichtungen (220, 230) des bestimmten Typs unter externen Vorrichtungen (220, 230), die gemäß der HDMI-CEC-Norm angeschlossen sind, anhand der empfangenen Antwortnachricht, falls der Anwenderbefehl zum Anzeigen externer Vorrichtungen (220, 230) des bestimmten Typs eingegeben wird.

2. Verfahren nach Anspruch 1, wobei die Anforderungsnachricht Daten enthält, die anfragen, ob die externe Vorrichtung (220, 230) eine Vorrichtung des bestimmten Typs ist oder nicht, und wobei die Antwortnachricht Daten enthält, die angeben, ob die externe Vorrichtung (220, 230) eine digitale Medienadapter-Vorrichtung, DMA-Vorrichtung, ist oder nicht.

3. Verfahren nach Anspruch 1 oder 2, das ferner das Bestimmen einer Anzahl externer Vorrichtungen (220, 230) des bestimmten Typs umfasst.

4. Verfahren nach Anspruch 3, das ferner das Anzeigen eines Menüs der externen Vorrichtung (220, 230) des bestimmten Typs umfasst, falls die Anzahl externer Vorrichtungen (220, 230) des bestimmten Typs gleich eins ist.

5. Verfahren nach Anspruch 3, das ferner das Anzeigen einer Liste der externen Vorrichtungen (220, 230) des bestimmten Typs umfasst, falls die Anzahl externer Vorrichtungen (220, 230) des bestimmten Typs größer als eins ist.

6. Verfahren nach Anspruch 3, das ferner das Anzeigen von Informationen, die angeben, dass keine externen Vorrichtungen (220, 230) des bestimmten Typs vorhanden sind, falls die Anzahl externer Vorrichtungen (220, 230) des bestimmten Typs gleich null ist, umfasst.

7. Verfahren nach einem vorhergehenden Anspruch, das ferner die folgenden Schritte umfasst:
Senden einer Anforderung zu der externen Vorrichtung (220, 230), um Menüinformationen zu schicken;
Empfangen der Menüinformationen von der externen Vorrichtung (220, 230); und
Anzeigen der Menüinformationen als eine Angabe, die die externe Vorrichtung (220, 230) als dem Typ entsprechend identifiziert.

8. Verfahren nach Anspruch 7, das das Verwenden der Menüinformationen, um einen Bildschirm anzuzeigen, um auf in der externen Vorrichtung (220, 230) abgelegte Inhalte zuzugreifen, umfasst.

9. Verfahren nach Anspruch 8, wobei die Menüinformationen Menüelemente umfassen, um die externe Vorrichtung (220, 230) zu steuern.

10. Verfahren nach Anspruch 9, wobei die Menüelemente einem obersten Menü der externen Vorrichtung (220, 230) entsprechen.

11. Abbildungsvorrichtung (210), die Folgendes umfasst:
eine Schnittstelle (214), die eine Datenkommunikation mit externen Vorrichtungen (220, 230), die gemäß der HDMI-CEC-Norm angeschlossen sind, ausführt; und
eine Steuereinheit (216), die:
eine Anforderungsnachricht erzeugt, die anfragt, ob die externe Vorrichtung (220, 230) eine digitale Medienadapter-Vorrichtung, DMA-Vorrichtung, ist oder nicht, die als Vorrichtung eines bestimmten Typs dient,
die Anforderungsnachricht zu den externen Vorrichtungen (220, 230) über die Schnittstelle (214) sendet und
von den externen Vorrichtungen (220, 230) eine Antwortnachricht empfängt, die in Reaktion auf die Anforderungsnachricht darauf antwortet, ob die externe Vorrichtung (220, 230) eine digitale Medienadapter-Vorrichtung, DMA-Vorrichtung, ist oder nicht,
wobei die Steuereinheit (216) externe Vorrichtungen (220, 230) des bestimmten Typs auf einer Anzeige anhand der empfangenen Antwortnachricht anzeigt, falls ein Anwenderbefehl zum Anzeigen der externen Vorrichtungen (220, 230) des bestimmten Typs eingegeben wird.

12. Abbildungsvorrichtung (210) nach Anspruch 11, wobei die Anforderungsnachricht Daten enthält, die anfragen, ob die externe Vorrichtung (220, 230) eine digitale Medienadapter-Vorrichtung, DMA-Vorrichtung, ist oder nicht, und wobei die Antwortnachricht Daten enthält, die angeben, ob die externe Vorrichtung (220, 230) eine digitale Medienadapter-Vorrichtung, DMA-Vorrichtung, ist oder nicht.

## Revendications

1. Procédé permettant de fournir des informations sur le type d'un ou de plusieurs dispositifs externes (220, 230) qui sont reliés à un appareil à images (210) le procédé étant **caractérisé par :**
la transmission aux un ou plusieurs dispositifs externes (220, 230) d'un message de demande recherchant si le dispositif externe (220, 230) qui est relié en utilisant la norme de commande d'appareils électroniques grand public à interface multimédia de haute définition, HDMI CEC, est ou non un dispositif adaptateur multimédia numérique, DMA, comme dispositif d'un type spécifique,
la réception en provenance des un ou plusieurs dispositifs externes (220, 230) d'un message de réplique répondant si le dispositif externe (220, 230) est ou non un dispositif adaptateur multimédia numérique DMA, en réponse au message de demande,
la détermination de ce qu'une instruction de l'utilisateur concernant l'affichage des informations sur les dispositifs externes (220, 230) d'un type spécifique est ou non reçue en entrée, et
l'affichage d'informations au sujet des dispositifs externes (220, 230) du type spécifique parmi des dispositifs externes (220, 230) reliés conformément à la norme HDMI CEC sur la base du message de réponse reçu si l'instruction de l'utilisateur concernant l'affichage des dispositifs externes (220, 230) du type spécifique est reçue en entrée.

2. Procédé selon la revendication 1, dans lequel le message de demande comprend des données recherchant si le dispositif externe (220, 230) est ou non un dispositif du type spécifique, et où le message de réponse comprend des données indiquant si le dispositif externe (220, 230) est ou non un dispositif adaptateur multimédia numérique DMA.

3. Procédé selon la revendication 1 ou 2, comprenant en outre la détermination du nombre de dispositifs externes (220, 230) du type spécifique.

4. Procédé selon la revendication 3, comprenant en outre l'affichage d'un menu du dispositif externe (220, 230) du type spécifique si le nombre de dispositifs externes (220, 230) du type spécifique vaut un.

5. Procédé selon la revendication 3, comprenant en outre l'affichage d'une liste des dispositifs externes (220, 230) du type spécifique si le nombre de dispositifs externes (220, 230) du type spécifique est supérieur à un.

6. Procédé selon la revendication 3, comprenant en outre l'affichage d'informations indiquant qu'il n'y a aucun dispositif externe (220, 230) du type spécifique si le nombre de dispositifs externes (220, 230) du type spécifique vaut zéro.

7. Procédé selon l'une quelconque des revendications précédentes, comprenant en outre les étapes suivantes :
la transmission d'une demande au dispositif externe (220, 230) pour qu'il envoie les informations d'un menu,
la réception des informations du menu en provenance du dispositif externe (220, 230), et
l'affichage des informations du menu comme étant une indication identifiant le dispositif externe (220, 230) correspondant au type.

8. Procédé selon la revendication 7, comprenant l'utilisation des informations du menu pour afficher un écran afin d'accéder aux contenus disposés sur le dispositif externe (220, 230).

9. Procédé selon la revendication 8, dans lequel les informations du menu comprennent des éléments de menu pour commander le dispositif externe (220, 230).

10. Procédé selon la revendication 9, dans lequel les éléments de menu correspondent à un menu d'ordre supérieur du dispositif externe (220, 230).

11. Appareil à images (210), comprenant :
une interface (214) qui exécute une communication par données avec des dispositifs externes (220, 230) qui sont reliés conformément à la norme HDMI CEC, et
une unité de commande (216) qui :
génère un message de demande recherchant si le dispositif externe (220, 230) est ou non un dispositif adaptateur multimédia numérique DMA en tant que dispositif d'un type spécifique,
transmet le message de demande aux dispositifs externes (220, 230) par l'intermédiaire de l'interface (214), et
reçoit en provenance des dispositifs externes (220, 230) un message de réplique répondant si le dispositif externe (220, 230) est ou non un dispositif adaptateur multimédia numérique DMA, en réponse au message de demande,
dans lequel l'unité de commande (216) affiche les dispositifs externes (220, 230) du type spécifique sur un afficheur, sur la base du message de réponse reçu, si une instruction de l'utilisateur concernant l'affichage des dispositifs externes (220, 230) du type spécifique est reçue en entrée.

12. Appareil à images (210) selon la revendication 11, dans lequel le message de demande comprend des données recherchant si le dispositif externe (220, 230) est ou non un dispositif adaptateur multimédia numérique (DMA), et où le message de réponse comprend des données indiquant si le dispositif externe (220, 230) est ou non un dispositif adaptateur multimédia numérique DMA.
